(19) Europäisches Patentamt
European Patent Office
Office européen des brevets

(11) **EP 4 742 087 A1**

(12) **EUROPÄISCHE PATENTANMELDUNG**

(43) Veröffentlichungstag:
**13.05.2026 Patentblatt 2026/20**

(21) Anmeldenummer: 24211239.9

(22) Anmeldetag: **06.11.2024**

(51) Internationale Patentklassifikation (IPC):
**G06K 7/00** (2006.01)  **G06K 7/10** (2006.01)
**G01S 13/87** (2006.01)

(52) Gemeinsame Patentklassifikation (CPC):
**G06K 7/10128; G01S 13/84; G06K 7/0008;**
G01S 13/4454; G01S 13/584; G01S 13/589;
G01S 13/878; G01S 2013/466

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **SICK AG**
**79183 Waldkirch (DE)**

(72) Erfinder:
• **Sock, Bjoern**
**21629 Neu Wulmstorf (DE)**

• **Schmidt, Vincent**
**22303 Hamburg (DE)**
• **Pudenz, Florian**
**22359 Hamburg (DE)**
• **Schwarzkopf, Sebastian**
**22949 Ammersbek (DE)**

(74) Vertreter: **Manitz Finsterwald**
**Patent- und Rechtsanwaltspartnerschaft mbB**
**Martin-Greif-Straße 1**
**80336 München (DE)**

Bemerkungen:
Geänderte Patentansprüche gemäss Regel 137(2)
EPÜ.

(54) **RFID-SYSTEM**

(57) Ein System zur Lokalisierung eines Transponders, der zur Identifikation im Radiofrequenzbereich vorgesehen ist (RFID-Transponder), bezogen auf ein RFID-Lesegerät umfasst das RFID-Lesegerät, das ein Anforderungssignal bei einer vorbestimmten Frequenz aussendet, den RFID-Transponder, der das Anforderungssignal empfängt und ein Antwortsignal an das RFID-Lesegerät zurücksendet, sowie eine Zusatzeinrichtung mit mindestens einer Sendeeinheit und mindestens einer Empfangseinheit. Die Sendeeinheit sendet mindestens ein Zusatzsignal aus, das sich von dem Anforderungssignal des RFID-Lesegeräts bezüglich der Frequenz unterscheidet. Die Empfangseinheit detektiert mindestens ein Detektionssignal, das durch eine Wechselwirkung des Zusatzsignals mit dem RFID-Transponder entsteht. Die Zusatzeinrichtung ist darüber hinaus ausgebildet, anhand des Detektionssignals mindestens eine Information zur Lokalisierung des RFID-Transponders bezogen auf das RFID-Lesegerät zu ermitteln.

Fig. 1

EP 4 742 087 A1

**Beschreibung**

Die Erfindung betrifft ein RFID-System (RFID von Engl.: radio frequency identification), d.h. ein System zur Identifikation, das im Radiofrequenzbereich arbeitet. Das RFID-System umfasst ein RFID-Lesegerät, das ein Anforderungssignal bei einer bestimmten Frequenz aussendet, und einen RFID-Transponder, der das Anforderungssignal empfängt und ein Antwortsignal an das RFID-Lesegerät zurücksendet.

Der RIFD-Transponder wird auch als RFID-Tag oder RFID-Antwortsender bezeichnet. Da RFID-Transponder üblicherweise keine Energiequelle wie beispielsweise eine Batterie aufweisen, dient das von dem RFID-Lesegerät empfangene Signal einerseits dazu, den RFID-Transponder mit Energie zu versorgen und dessen elektronische Elemente sozusagen aufzuwecken, und andererseits dazu, ein Antwortsignal von dem RFID-Transponder anzufordern, das ein Sender des RFID-Transponders anschließend zur Identifikation an das RFID-Lesegerät sendet.

RFID-Lesegeräte verfügen mittlerweile über einen relativ großen "Lesebereich", d.h. über eine relativ große Reichweite für eine Kommunikation mit einem oder mehreren RFID-Transpondern. Die Reichweite eines RFID-Lesegeräts beträgt beispielsweise 8 bis 10 m, wenn eine kapazitive Kopplung zwischen dem RFID-Lesegerät und dem RFID-Transponder erfolgt.

Eine solche Reichweite des RFID-Lesegeräts bedingt jedoch, dass innerhalb des Lesebereichs des RFID-Lesegeräts ein empfangenes Antwortsignal nicht einer Position eines bestimmten RFID-Transponders zugeordnet werden kann. Falls sich mehrere RFID-Transponder im Lesebereich befinden, lässt sich nicht eindeutig feststellen, ob eine Kommunikation des RFID-Lesegeräts mit einem gewünschten RFID-Transponder oder mit einem anderen RFID-Transponder erfolgt, der sich zufällig im Lesebereich des RFID-Lesegeräts befindet.

Da RFID-Systeme in vielen technischen Bereichen verwendet werden, wäre es für viele Anwendungen von RFID-Systemen vorteilhaft, innerhalb des Lesebereichs des RFID-Geräts die Position eines oder mehrerer RFID-Transponder oder zumindest deren Bewegungsrichtung bezogen auf das RFID-Lesegerät zu ermitteln. Es sind zwar mehrere Verfahren bekannt, die zumindest eine Abschätzung des Abstands eines RFID-Transponders bezogen auf ein RFID-Lesegerät gestatten. Diese bekannten Verfahren verfügen jedoch entweder nur über eine begrenzte Genauigkeit, oder es ist ein erhöhter Aufwand zum Ermitteln des Abstands eines RFID-Transponders bezogen auf das RFID-Lesegerät erforderlich.

Eine Aufgabe der Erfindung besteht darin, ein RFID-System und ein Verfahren zum Betreiben eines solchen anzugeben, die eine Lokalisierung eines RFID-Transponders mit einem geringen Aufwand ermöglichen.

Diese Aufgabe wird durch ein System und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Das erfindungsgemäße System ist zur Lokalisierung eines Transponders, der zur Identifikation im Radiofrequenzbereich vorgesehen ist (RFID-Transponder), bezogen auf ein RFID-Lesegerät vorgesehen. Das System umfasst daher das RFID-Lesegerät, das ein Anforderungssignal bei einer vorbestimmten Frequenz aussendet, und den RFID-Transponder, der das Anforderungssignal empfängt und ein Antwortsignal an das RFID-Lesegerät zurücksendet. Darüber hinaus umfasst das System eine Zusatzeinrichtung mit mindestens einer Sendeeinheit und mindestens einer Empfangseinheit. Die Sendeeinheit sendet mindestens ein Zusatzsignal aus, das sich von dem Anforderungssignal des RFID-Lesegeräts bezüglich der Frequenz unterscheidet. Die Empfangseinheit detektiert mindestens ein Detektionssignal, das durch eine Wechselwirkung des Zusatzsignals mit dem RFID-Transponder entsteht. Die Zusatzeinrichtung ist darüber hinaus ausgebildet, anhand des Detektionssignals mindestens eine Information zur Lokalisierung des RFID-Transponders bezogen auf das RFID-Lesegerät zu ermitteln.

Das System ist also einerseits für eine Kommunikation zwischen dem RFID-Lesegerät und dem RFID-Transponder vorgesehen, bei welcher das RFID-Lesegerät das Anforderungssignal bei der vorbestimmten Frequenz aussendet und der RFID-Transponder das Antwortsignal zurücksendet, das von dem RFID-Lesegerät empfangen werden kann. Die vorbestimmte Frequenz liegt beispielsweise im Ultrahochfrequenz-RFID-Band (UHF RFID) zwischen etwa 850 und 950 MHz. Dies gilt ebenso für das Antwortsignal des RFID-Transponders.

Wenn der RFID-Transponder auf die Anfrage des RFID-Lesegeräts antwortet und das Antwortsignal als moduliertes Signal sendet, moduliert der RFID-Transponder seinen Rückstreuquerschnitt. Diese Änderung des Rückstreuquerschnitts des RFID-Transponders ist beispielsweise dadurch bedingt, dass zur Modulation des Antwortsignals die Impedanz an einem Antennenport des RFID-Transponders verändert wird.

Die Änderung bzw. Modulation des Rückstreuquerschnitts des RFID-Transponders ist unabhängig von der Frequenz der Signale, die den RFID-Transponder erreichen. Dies bedeutet, dass die Modulation des Rückstreuquerschnitts des RFID-Transponders, die beim Senden des Antwortsignals hervorgerufen wird, über ein breites Frequenzband und nicht nur bei der vorbestimmten Frequenz und der Frequenz des Antwortsignals detektierbar ist.

Die Modulation des Rückstreuquerschnitts des RFID-Transponders wirkt sich daher auch auf das Zusatzsignal und das Detektionssignal aus, die von der Sendeeinheit bzw. Empfangseinheit der Zusatzeinrichtung ausgesandt bzw. empfangen werden. Das Detektionssignal kann beispielsweise durch eine Streuung bzw. Reflexion des Zusatzsignals an dem RFID-Transponder bei der Frequenz des mindestens einen Zusatzsignals hervorgerufen werden, wenn sich der RFID-Transponder relativ zu dem RFID-Lesegerät nicht bewegt. Die Modulation des Antwortsignals, das in Reaktion auf das Anforderungssignal von dem RFID-Transponder gesendet wird, bewirkt somit auch eine Modulation des Detektionssignals bei der Frequenz des Zusatzsignals, die von der vorbestimmten Frequenz verschieden ist.

Die Zusatzeinrichtung kann das empfangene Detektionssignal aufgrund dieser Modulation derart auswerten, dass als Information zur Lokalisierung des RFID-Transponders beispielsweise dessen Abstand bezogen auf das RFID-Lesegerät und/oder bezogen auf die Zusatzeinrichtung anhand einer Änderung einer Phasenlage pro Frequenz ermittelt wird. Die Ermittlung des Abstands des RFID-Transponders kann ähnlich wie bei einem frequenzmodulierenden Radarsystem erfolgen, indem beispielsweise die Änderung der Phasenlage des Detektionssignals bezogen auf das Antwortsignal in Relation zu der Phasendifferenz zwischen der vorbestimmten Frequenz des Antwortsignals bzw. Anforderungssignals und der davon verschiedenen Frequenz des Zusatzsignals bzw. Detektionssignals ausgewertet wird.

Ähnlich wie bei Radarsystemen ist es alternativ oder zusätzlich möglich, anhand einer Frequenzverschiebung zwischen dem Zusatzsignal und dem Detektionsgeschwindigkeit eine radiale Geschwindigkeit des RFID-Transponders und/oder dessen Bewegungsrichtung bezogen auf das RFID-Lesegerät zu ermitteln. Die mindestens eine Information zur Lokalisierung des RFID-Transponders kann daher zusätzlich oder als Alternative zum Abstand zwischen dem RFID-Transponder und dem RFID-Lesegerät die radiale Geschwindigkeit und/oder die Bewegungsrichtung des RFID-Transponders umfassen.

Das erfindungsgemäße System zeichnet sich dadurch aus, dass aufgrund der Zusatzeinrichtung und der Signale, die von dieser gesendet und empfangen werden, eine oder mehrere Informationen bezüglich der Lokalisierung des RFID-Transponders bestimmbar sind. Dies ermöglicht eine eindeutige Kommunikation des RFID-Lesegeräts mit dem gewünschten RFID-Transponder, während gleichzeitig eine Kommunikation mit einem unerwünschten RFID-Transponder verhindert werden kann.

Da das Antwortsignal des RFID-Transponders und das Detektionssignal bei unterschiedlichen Frequenzen empfangen werden, können diese Signale gleichzeitig detektiert und ausgewertet werden, um die Information bzw. Informationen zur Lokalisierung des RFID-Transponders zu ermitteln. Mit anderen Worten ist lediglich ein Kommunikationsschritt zwischen dem RFID-Lesegerät und der Zusatzeinrichtung einerseits und dem RFID-Transponder andererseits notwendig, um die Information zur Lokalisierung des RFID-Transponders zu ermitteln, da die jeweilige Kommunikation des RFID-Lesegeräts und der Zusatzeinrichtung mit dem RFID-Transponder gleichzeitig erfolgen kann. Dadurch verringert sich der zeitliche Aufwand zur Lokalisierung des RFID-Transponders bezogen auf das RFID-Lesegerät und/oder die Zusatzeinrichtung im Vergleich zu bekannten Systemen, die ein sequentielles Senden von Signalen bei zwei oder mehr Frequenzen erfordern.

Die eigentliche Kommunikation zwischen dem RFID-Lesegerät und dem RFID-Transponder, d.h. die Identifikation im Radiofrequenzbereich, für die das System vorgesehen ist, wird ferner durch die Zusatzeinrichtung nicht gestört, da dessen Signale eine andere Frequenz aufweisen, die von der vorbestimmten Frequenz des Anforderungssignals bzw. Antwortsignals verschieden ist. Dies gilt ebenso für weitere RFID-Geräte oder -Systeme in der Umgebung, die folglich ebenfalls durch die Zusatzeinrichtung nicht gestört werden.

Außerdem bestehen für das Zusatzsignal und das entsprechende Detektionssignal der Zusatzeinrichtung geringere Anforderungen als für das Anforderungssignal und das Antwortsignal des RFID-Lesegeräts bzw. des RFID-Transponders, da über das Zusatzsignal und das entsprechende Detektionssignal keine Identifikation im Radiofrequenzbereich erfolgen soll. Die Sendeeinheit und dem Empfangseinheit der Zusatzeinrichtung können daher einen erheblich einfacheren elektronischen Aufbau aufweisen als das RFID-Lesegerät und der RFID-Transponder.

Gemäß einer Ausführungsform ist das von der Sendeeinheit der Zusatzeinrichtung gesendete Zusatzsignal ein nicht-moduliertes Signal. Ein solches nicht-moduliertes Signal verringert die technischen Anforderungen an die Zusatzeinrichtung. Das Zusatzsignal kann bei dieser Ausführungsform beispielsweise ein nicht-moduliertes Dauerstrich- bzw. CW-Signal sein, im Gegensatz zu dem Anforderungssignal des RFID-Lesegeräts.

Das Zusatzsignal kann bei dieser Ausführungsform eine Frequenz innerhalb eines RFID-Bandes aufweisen, in welchem die vorbestimmte Frequenz des Anforderungssignals liegt. Die Frequenzdifferenz zwischen der Frequenz des Zusatzsignals und der vorbestimmten Frequenz des RFID-Lesegeräts bzw. RFID-Frequenz sollte möglichst gering sein, um beispielsweise den Abstand des RFID-Transponders bezogen auf das RFID-Gerät genau zu ermitteln und den RFID-Transponder eindeutig identifizieren zu können. Möglichst gering bedeutet in diesem Zusammenhang, dass der eine bestimmte Frequenzdifferenz jedoch nicht unterschritten werden darf, damit ein sogenanntes Phasenrauschen der Signale die Ermittlung der einen oder mehreren Informationen zur Lokalisierung des RFID-Transponders nicht beeinträchtigt.

Das Phasenrauschen kann nämlich auftreten, wenn die Frequenzdifferenz zwischen dem Zusatzsignal und dem Anforderungssignal zu gering ist, und es ist durch die Überlagerung von Phasenwerten aufgrund des Rauschens der Signale bedingt. Bei der Auswertung der Signale, beispielsweise des Antwortsignals und des Detektionssignals zur Ermittlung des Abstands des RFID-Transponders, kann das Phasenrauschen zu einer geringen Auflösung führen.

Bei einer weiteren Ausführungsform kann die Frequenz des Zusatzsignals außerhalb eines Frequenzbandes liegen, das für eine Kommunikation des RFID-Lesegeräts und des RFID-Transponders vorgesehen ist. Die Frequenz des Zusatzsignals sollte jedoch kein Vielfaches einer Trägerfrequenz des Anforderungssignals sein, das von dem RFID-Lesegerät ausgesandt wird.

Eine große Differenz zwischen der Frequenz des Zusatzsignals und der vorbestimmten Frequenz des Anforderungssignals kann die Auswirkungen des vorstehend erwähnten Phasenrauschens beseitigen. Wenn sich die Frequenz des Zusatzsignals außerhalb des Frequenzbandes für die Kommunikation zwischen dem RFID-Lesegerät und dem RFID-Transponder befindet, d.h. außerhalb des entsprechenden RFID-Bandes, kann das Zusatzsignal der Zusatzeinrichtung weitere RFID-Lesegeräte in der Umgebung des Systems nicht stören.

Die Sendeeinheit kann ferner mindestens zwei Zusatzsignale aussenden, die sich jeweils von dem Anforderungssignal bezüglich der Frequenz unterscheiden, d.h. von der vorbestimmten Frequenz des Anforderungssignals. Die Empfangseinheit kann entsprechend mindestens zwei Detektionssignale bei der jeweiligen Frequenz der mindestens zwei Zusatzsignale detektieren. Durch die Verwendung mindestens zweier Zusatzsignale und mindestens zweier Detektionssignale kann die Genauigkeit der einen oder mehreren Informationen zur Lokalisierung des RFID-Transponders verbessert werden, d.h. im Vergleich zur Verwendung von nur einer Zusatzfrequenz, da beispielsweise eine redundante Auswertung mehrerer Phasendifferenzen pro Frequenzdifferenz möglich ist.

Darüber hinaus kann die Zusatzeinrichtung ausgebildet sein, einen Abstand, eine Bewegungsrichtung und eine Geschwindigkeit des RFID-Transponders bezogen auf das RFID-Lesegerät anhand der mindestens zwei Detektionssignale zu ermitteln. Zur Ermittlung dieser Größen sind folglich zwar mindestens zwei Zusatzsignale und mindestens zwei Detektionssignale erforderlich, die jedoch wiederum gleichzeitig mit dem Antwortsignal des RFID-Transponders auf das Anforderungssignal des RFID-Lesegeräts erfasst werden können. Folglich können der Abstand, die Bewegungsrichtung und die Geschwindigkeit des RFID-Transponders bezogen auf das RFID-Lesegerät mit einem geringen zeitlichen Aufwand ermittelt werden, d.h. sozusagen anhand einer einzigen Reaktion des RFID-Transponders in der Form des Antwortsignals und der mindestens zwei Detektionssignale.

Die Zusatzeinrichtung kann ferner eine erste und eine zweite Sendeeinheit sowie eine erste und eine zweite Empfangseinheit aufweisen. Die erste Sendeeinheit und die erste Empfangseinheit können von der zweiten Sendeeinheit und der zweiten Empfangseinheit jeweils mit einer vorbestimmten Distanz zwischen diesen räumlich getrennt sein. Die Zusatzeinrichtung kann ausgebildet sein, einen Winkel des RFID-Transponders bezogen auf eine vorbestimmte Richtung anhand der mindestens zwei Detektionssignale, die jeweils mittels der ersten bzw. zweiten Empfangseinheit detektiert werden, und anhand der vorbestimmten Distanz zu ermitteln.

Diese Ausführungsform gestattet somit, die räumliche Position des RFID-Transponders zu lokalisieren, d.h. dessen Abstand und dessen Winkel bezogen auf das RFID-Lesegerät und bezogen auf eine vorbestimmte Richtung.

Das RFID-Lesegerät kann ausgebildet sein, die Zusatzeinrichtung derart zu steuern, dass die Sendeeinheit der Zusatzeinrichtung das Zusatzsignal nur dann sendet, wenn das RFID-Lesegerät das Anforderungssignal aussendet. Das RFID-Lesegerät ist bei dieser Ausführungsform folglich in der Lage, die Zusatzeinrichtung auf eine bestimmte Weise zu steuern, so dass eine Belegungszeit begrenzt ist, mit der das Zusatzsignal die Frequenz belegt, die von der Anforderungsfrequenz des RFID-Lesegerät verschieden ist. Dadurch können Konflikte mit gesetzlichen Vorschriften vermieden werden, die durch eine zu lange Belegungszeit einer bestimmten Frequenz durch das Zusatzsignal auftreten könnten.

Gemäß einer weiteren Ausführungsform ist die Zusatzeinrichtung als ein Transceiver ausgebildet, der die Sendeeinheit und die Empfangseinheit umfasst. Das von dem Transceiver gesendete Zusatzsignal kann entweder ein nicht-moduliertes Signal in einem Frequenzband des Anforderungssignals oder ein moduliertes Signal bei einer Frequenz außerhalb des Frequenzbandes des Anforderungssignals sein.

Diese Ausführungsform gestattet eine kompakte Ausgestaltung der Zusatzeinrichtung und des gesamten Systems, da der Transceiver sowohl die Sende- als auch die Empfangseinheit umfasst. Anhand der Phaseninformation bzw. Phasenlage des Antwortsignals, welches das RFID-Lesegerät empfängt, und der Phaseninformation bzw. Phasenlage des Detektionssignals, das der Transceiver als Zusatzeinrichtung empfängt, kann wiederum der Abstand des RFID-Transponder bezogen auf das RFID-Lesegerät bzw. die Zusatzeinrichtung mit geringem technischen Aufwand ermittelt werden, da lediglich einziger zusätzlicher Transceiver erforderlich ist.

Gemäß einer weiteren Ausführungsform umfasst die Zusatzeinrichtung mindestens zwei Transceiver, die eine jeweilige Sendeeinheit und eine jeweilige Empfangseinheit aufweisen. Die jeweilige Sendeeinheit der Transceiver kann ein jeweiliges Zusatzsignal als ein nicht-moduliertes Signal außerhalb eines Frequenzbandes des Anforderungssignals senden. Die jeweilige Empfangseinheit der zwei Transceiver kann bei dieser Ausführungsform entsprechend ein jeweiliges Detektionssignal empfangen.

Anhand der Phaseninformation der mindestens zwei Detektionssignale der mindestens zwei Transceiver und der Phaseninformation des Antwortsignals, das von dem RFID-Lesegerät empfangen wird, kann die Zusatzeinrichtung nicht nur den Abstand zwischen dem RFID-Transponder und dem RFID-Lesegerät bzw. der Zusatzeinrichtung ermitteln, sondern zusätzlich ähnlich wie bei Radarsystemen aufgrund des Dopplereffekts die Geschwindigkeit des RFID-Transponders bezogen auf das RFID-Lesegerät und die Bewegungsrichtung des RFID-Transponders. Da das Antwortsignal des RFID-Transponders und die mindestens zwei Detektionssignale gleichzeitig empfangen werden können, können die vorstehend genannten Größen anhand eines einzigen Auslesevorgangs des RFID-Lesegeräts und der mindestens zwei Transceiver ermittelt werden, d.h. ohne dass eine zeitliche Abfolge bestimmter Signale erforderlich ist und deren Detektion abgewartet werden muss.

Wenn die mindestens zwei Transceiver einen vorbestimmten räumlichen Abstand aufweisen, was in der Praxis in den meisten Fällen gegeben ist, kann anhand einer Phasendifferenz zwischen den mindestens zwei Detektionssignalen der mindestens zwei Transceiver und anhand des Abstands zwischen den Transceivern ein Winkel des RFID-Transponders bezogen auf eine vorbestimmte Raumrichtung, beispielsweise rechtwinklig zu einer Außenfläche des RFID-Lesegeräts, ermittelt werden. Falls die Zusatzeinrichtung genau zwei Transceiver umfasst, können diese beispielsweise auf beiden Seiten des RFID-Lesegeräts angeordnet sein, um den vorbestimmten räumlichen Abstand zwischen den zwei Transceivern herzustellen.

Gemäß einer weiteren Ausführungsform kann die Zusatzeinrichtung einen Transceiver, d.h. einen einzelnen Transceiver, umfassen, der die Sendeeinheit und die Empfangseinheit aufweist, und die Sendeeinheit kann mindestens zwei Zusatzsignale als nicht-modulierte Signale senden. Die Frequenzen der mindestens zwei Zusatzsignale können innerhalb oder außerhalb des Frequenzbandes Anforderungssignals, d.h. des RFID-Frequenzbandes, liegen.

Die Frequenz, bei der die Sendeeinheit des zusätzlichen Transceivers sendet, d.h. zusätzlich zu dem RFID-Lesegerät, kann also von der RFID-Trägerfrequenz, bei der das Anforderungssignal gesendet wird, unabhängig sein. Insbesondere kann die jeweilige Frequenz der zwei Zusatzsignale innerhalb eines ISM-Bandes liegen (ISM-Band von Industrial Scientific and Medical Band), d.h. innerhalb eines Frequenzbereichs, der durch Hochfrequenzgeräte in Industrie, Wissenschaft und Medizin sowie in häuslichen und ähnlichen Bereichen lizenzfrei und meist genehmigungsfrei nutzbar ist. Anhand der Phaseninformationen der jeweiligen zwei Zusatzsignale bzw. der entsprechenden Detektionssignale kann wiederum zusätzlich zu dem Abstand zwischen dem RFID-Transponder und dem RFID-Lesegerät die Bewegungsrichtung und die Geschwindigkeit des RFID-Transponders ermittelt werden, und zwar insbesondere anhand eines einzigen Auslesevorgangs bzw. einer einzigen Transponderantwort.

Ferner kann die Sendeeinheit der Zusatzeinrichtung mindestens ein Zusatzsignal zur Anwendung eines Frequenzsprungverfahrens senden. Das Zusatzsignal kann zur Anwendung des Frequenzsprungverfahrens bei zwei verschiedenen Frequenzen gesendet werden, die sich zeitlich nacheinander und periodisch abwechseln. Zwischen diesen beiden Frequenzen liegt also ein Frequenzsprung oder eine Frequenzverschiebung vor.

Anhand des Frequenzsprungs und einer Phasenverschiebung zwischen dem Zusatzsignal und dem Detektionssignal kann wiederum ähnlich wie bei Radarsystemen der Abstand zwischen dem RFID-Transponder und dem RFID-Lesegerät bzw. der Zusatzeinrichtung ermittelt werden. Zusätzlich können anhand des Dopplereffekts die radiale Geschwindigkeit und die Bewegungsrichtung des RFID-Transponders ermittelt werden. Dabei sollte der Frequenzsprung vorzugsweise möglichst klein gewählt werden, da dieser umgekehrt proportional zur maximalen Reichweite ist, bis zu welcher der Abstand des RFID-Transponders bezogen auf das RFID-Lesegerät eindeutig ermittelt werden kann.

Gemäß einer weiteren Ausführungsform sind die Sendeeinheit und die Empfangseinheit der Zusatzeinrichtung räumlich getrennt voneinander angeordnet. Dies ermöglicht eine einfache Ausgestaltung der Zusatzeinrichtung. Aufgrund des räumlichen Abstands zwischen der Sendeeinheit und der Empfangseinheit ist bei dieser Ausführungsform zusätzlich eine Positionsbestimmung des RFID-Transponders mittels Triangulation möglich. Die Sendeeinheit und die Empfangseinheit der Zusatzeinrichtung können bei dieser Ausführungsform auf einer jeweiligen Seite des RFID-Lesegeräts angeordnet sein, was die Genauigkeit bei der Triangulation verbessert. Alternativ können die Sendeeinheit und die Empfangseinheit jedoch auch auf der gleichen Seite des RFID-Lesegeräts angeordnet sein.

Ferner kann die Zusatzeinrichtung eine Sendeeinheit und zwei Empfangseinheiten aufweisen, wobei die Sendeeinheit räumlich getrennt von den zwei Empfangseinheiten angeordnet sein kann. Durch die Verwendung von zwei Empfangseinheiten kann die Genauigkeit bei der Ermittlung der Position des RFID-Transponders verbessert werden, da eine redundante Triangulation der Phasenlage möglich ist.

Weiterer Gegenstand der Erfindung ist ferner ein Verfahren zur Lokalisierung eines RFID-Transponders bezogen auf ein RFID-Lesegerät in einem RFID-System. Gemäß dem Verfahren sendet das RFID-Lesegerät ein Anforderungssignal bei einer vorbestimmten Frequenz aus, während der RFID-Transponder das Anforderungssignal empfängt und ein entsprechendes Antwortsignal an das RFID-Lesegerät zurücksendet. Ferner sendet mindestens eine Sendeeinheit einer Zusatzeinrichtung mindestens ein Zusatzsignal aus, das sich von dem Anforderungssignal bezüglich der Frequenz unterscheidet. Mindestens eine Empfangseinheit der Zusatzeinrichtung detektiert ferner mindestens ein Detektionssignal, das durch eine Wechselwirkung des mindestens einen Zusatzsignals mit dem RFID-Transponder erzeugt wird. Anhand des mindestens einen Detektionssignals wird mindestens eine Information zur Lokalisierung des RFID-Transponders bezogen auf das RFID-Lesegerät ermittelt.

Das Verfahren ist folglich für den Betrieb des vorstehend beschriebenen Systems vorgesehen. Daher gelten für das Verfahren die Ausführungen zum System entsprechend, und dies gilt insbesondere hinsichtlich der Vorteile und der bevorzugten Ausführungsformen. Ferner versteht es sich, dass sämtliche hierin genannten Merkmale miteinander kombinierbar sind, sofern nicht explizit etwas Gegenteiliges angegeben ist.

Gemäß einer Ausführungsform des Verfahrens sendet die Sendeeinheit mindestens zwei Zusatzsignale aus, die sich jeweils von dem Anforderungssignal bezüglich der Frequenz unterscheiden, und die Empfangseinheit detektiert mindestens zwei Detektionssignale bei der jeweiligen Frequenz der mindestens zwei Zusatzsignale. Ein Abstand, eine Bewegungsrichtung und eine Geschwindigkeit des RFID-Transponders bezogen auf das RFID-Lesegerät werden anhand der mindestens zwei Detektionssignale ermittelt.

Die zwei Zusatzsignale können insbesondere von zwei verschiedenen Sendeeinheiten gesendet werden, die eine vorbestimmte räumliche Distanz zwischen diesen aufweisen. Die Zusatzeinrichtung, welche die Zusatzsignale aussendet, kann folglich mindestens zwei Sendeeinheiten umfassen, die räumlich voneinander getrennt sind und die vorbestimmte räumliche Distanz voneinander aufweisen. Entsprechend kann die Zusatzeinrichtung zwei Empfangseinheiten aufweisen, zwischen denen ebenfalls die vorbestimmte räumliche Distanz vorliegt. Ein Winkel des RFID-Transponders bezogen auf eine vorbestimmte Richtung kann anhand der mindestens zwei Detektionssignale und anhand der vorbestimmten räumlichen Distanz ermittelt werden. Die Ermittlung des Winkels kann vorzugsweise von einer Phasendifferenz zwischen den zwei Detektionssignalen abhängen.

Nachfolgend wird die Erfindung beispielhaft anhand vorteilhafter Ausführungsformen unter Bezugnahme auf die beigefügten Figuren beschrieben. Es zeigen, jeweils schematisch:

Fig. 1   ein erfindungsgemäßes System mit einem RFID-Lesegerät, einem RFID-Transponder und einem zusätzlichen Transceiver,

Fig. 2   eine Ausführungsform des erfindungsgemäßen Systems mit zwei zusätzlichen Transceivern,

Fig. 3   eine weitere Ausführungsform des erfindungsgemäßen Systems mit einem zusätzlichen Transceiver, der jedoch Signale bei zwei unterschiedlichen Frequenzen sendet und empfängt,

Fig. 4   eine weitere Ausführungsform des erfindungsgemäßen Systems mit einer zusätzlichen Sendeeinheit und einer zusätzlichen Empfangseinheit anstelle des Transceivers, die räumlich voneinander getrennt sind,

Fig. 5   eine weitere Ausführungsform des in Fig. 4 gezeigten Systems und

Fig. 6   eine weitere Ausführungsform des in Fig. 4 gezeigten Systems mit einer zusätzlichen Empfangseinheit.

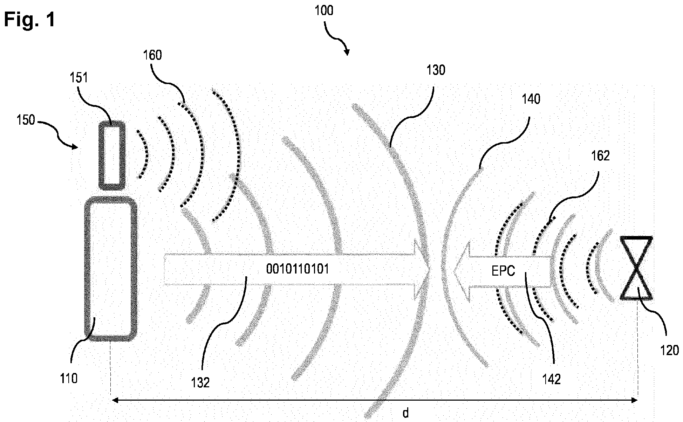

Fig. 1 zeigt schematisch ein System 100 zur Identifikation mittels Radiofrequenz (RFID-System), das ein RFID-Lesegerät 110 und einen RFID-Transponder 120 umfasst, der auch als RFID-Antwortsender oder RFID-Tag bezeichnet wird. Das System 100 ermöglicht eine Identifizierung des RFID-Tags mittels elektromagnetischer Wellen im Radiofrequenzbereich, beispielsweise in einem Frequenzbereich zwischen 850 und 950 MHz.

Das RFID-Lesegerät 110 emittiert elektromagnetische Wellen 130, um ein Abfragesignal bzw. Anforderungssignal 132 in Richtung des RFID-Transponders 120 zu senden. Das Abfragesignal 132 ist in Fig. 1 durch eine Sequenz von Nullen und Einsen veranschaulicht.

Wenn sich der RFID-Transponder 120 innerhalb eines Kommunikations- oder Lesebereichs des RFID-Lesegeräts 110 befindet, d.h. innerhalb einer Reichweite des RFID-Lesegeräts 110 von beispielsweise 8 bis 10 m, kann der RFID-Transponder 120 das von dem RFID-Lesegerät 110 gesendete Abfragesignal 132 mittels eines nicht dargestellten Empfängers empfangen.

Die beispielhafte Reichweite von 8 bis 10 m bezieht sich dabei auf eine kapazitive Kopplung zwischen RFID-Lesegerät 110 und dem RFID-Transponder 120. Im Gegensatz dazu erfordern RFID-Systeme mit induktiver Kopplung, wie beispielsweise Kreditkarten, eine Annäherung des Transponders an das Lesegerät bis auf einige Millimeter, um eine Identifizierung durchführen zu können.

Der RFID-Transponder 120 weist keine eigene Energiequelle wie etwa eine Batterie auf. Daher sind die von dem RFID-Transponder empfangenen elektromagnetischen Wellen 130, die das RFID-Lesegerät 110 emittiert, neben der Übermittlung des Anforderungssignals 132 auch dafür vorgesehen, für einen internen Gleichrichter (nicht dargestellt) des RFID-Transponders 120 eine ausreichende Energiemenge zur Verfügung zu stellen, um den RFID-Transponder 120 zu aktivieren bzw. "aufzuwecken". Durch das Empfangen der elektromagnetischen Wellen 130 des RFID-Lesegeräts 110 werden somit weitere interne Elemente bzw. elektronisch Einheiten des RFID-Transponders 120 durch eine Spannungsversorgung mittels des internen Gleichrichters in Betrieb genommen.

Dadurch wird der RFID-Transponder 120 in die Lage versetzt, mittels eines nicht dargestellten Senders ebenfalls elektromagnetische Wellen 140 zu emittieren und ein Antwortsignal 142 an das RFID-Lesegerät 110 zu senden. Das Antwortsignal 142 umfasst beispielsweise einen elektronischen Produktcode, der in Fig. 1 mit EPC bezeichnet ist. Anhand des Antwortsignals 142 kann das RFID-Lesegerät 110 den RFID-Transponder bzw. RFID-Tag 120 identifizieren.

Aufgrund des relativ großen Lesebereichs des RFID-Lesegeräts 110 mit der Reichweite von beispielsweise 8 bis 10 m ist es jedoch nur mit erheblichem zusätzlichem Aufwand möglich, das Antwortsignal 142 des RFID-Transponders 120 einer Position innerhalb des Lesebereichs des RFID-Lesegeräts zuzuordnen. Falls sich mehrere RFID-Transponder 120 innerhalb des Lesebereichs des RFID-Lesegeräts 110 befinden, kann unklar sein, ob das RFID-Lesegerät mit einem gewünschten oder "richtigen" RFID-Transponder kommuniziert oder mit einem weiteren RFID-Transponder, der sich nur zufällig im Lesebereich des RFID-Lesegeräts befindet. Für einige Anwendungen von RFID-Systemen ist es daher wünschenswert, die Position bzw. räumliche Lage eines RFID-Transponders 120 bezogen auf ein RFID-Lesegerät 110 zu ermitteln. Darüber hinaus kann auch die Ermittlung der Richtung, in der sich ein RFID-Transponder 120 bezogen auf das RFID-Lesegerät 110 bewegt, und die Ermittlung von dessen radialer Geschwindigkeit und/oder dessen Winkel bezogen auf eine vorbestimmte Richtung für einige Anwendungen vorteilhaft sein.

Um den RFID-Transponder 120 bezogen auf das RFID-Lesegerät 110 zu lokalisieren, wird bei bekannten RFID-Systemen beispielsweise eine empfangene Signalstärke bewertet, d.h. ein RSSI-Wert (RSSI vom Englischen "Received Signal Strength Indication"). In einer metallischen Umgebung und auch bei einer Ausbreitung des elektromagnetischen Feldes des RFID-Lesegeräts 110 über mehrere Wege ist das Antwortsignal 142 des RFID-Transponders 120 jedoch häufig gleichmäßig räumlich verteilt. Dies erschwert ausgehend von dem RSSI-Wert den Rückschluss auf die Entfernung des RFID-Transponders 120 bezogen auf das RFID-Lesegerät 110.

Ferner wird bei bekannten Systemen die Phasenlage des Antwortsignals ausgewertet werden, das der RFID-Transponder 120 an das RFID-Lesegerät 110 zurücksendet. Anhand der Phasenlage kann entschieden werden, ob sich ein RFID-Transponder 120 an dem RFID-Lesegerät 110 vorbeibewegt, und zwar dadurch, dass sich das Vorzeichen des Phasenwinkels ändert. Die Auswertung der Phasenlage des von dem RFID-Transponder 120 zurückgesendeten Antwortsignals 142 lässt jedoch meist nur mehrdeutige Aussagen bezüglich der Entfernung des RFID-Transponders 120 bezogen auf das RFID-Lesegerät 110 und bezogen auf die Bewegungsrichtung des RFID-Transponders 120 zu. Eine Eindeutigkeit lässt sich nur bei einer Entfernung zwischen RFID-Transponder 120 und RFID-Lesegerät 110 von einer halben Wellenlänge des Abfrage- bzw. Antwortsignals 132, 142 erreichen.

Um diese Schwierigkeiten bekannter Systeme zu beheben und eine verbesserte Lokalisierung des RFID-Transponders 120 bezogen auf das RFID-Lesegerät durchzuführen, umfasst das erfindungsgemäße RFID-System 100 eine Zusatzeinrichtung 150, die bei der Ausführungsform von Fig. 1 einen zusätzlichen Transceivers 151 beinhaltet. Der Transceiver 151 umfasst eine Sendeeinheit für ein Zusatzsignal 160 und eine Empfangseinheit für ein Detektionssignal 162.

Der Transceiver 151 sendet das Zusatzsignal 160 in Richtung des RFID-Transponders 120, an dem das Zusatzsignal 160 reflektiert wird. Das reflektierte Zusatzsignal 160 ist in Fig. 1 als Detektionssignal 162 dargestellt. Das Zusatzsignal 160 und das reflektierte Detektionssignal 162 weisen jeweils eine Frequenz auf, die von der Frequenz der elektromagnetischen Wellen 130, 140 bzw. der Trägerfrequenz des Abfragesignals 132 und des Antwortsignals 142 verschieden ist, die zur Kommunikation zwischen dem RFID-Lesegerät 110 und dem RFID-Transponder 120 dienen. Die Frequenz der elektromagnetischen Wellen 130, 140 liegt beispielsweise in einem gesetzlich zugelassenen RFID-Band, z.B. zwischen 850 und 950 MHz, während die jeweilige Frequenz des Zusatzsignal 160 bzw. des Detektionssignals 162 entweder eine andere Frequenz in diesem RFID-Band oder eine Frequenz weit außerhalb dieses RFID-Bandes ist und beispielsweise in einem ISM-Band bei 2,4 GHz liegt. Eine solche Frequenz stört weitere RFID-Lesegeräte nicht, die sich möglicherweise im Umfeld des RFID-Systems 100 befinden. Im ersten Fall, d.h. bei einer Frequenz des Zusatzsignals 160 und des Detektionssignals 162 im RFID-Band, kann das Zusatzsignal 160 ein nicht-moduliertes Dauerstrich- bzw. CW-Signal sein. Das Zusatzsignal 160 und das Detektionssignal 162 sind in Fig. 1 mit gestrichelten Linien veranschaulicht, um diese in der Darstellung von den Signalen 130, 132 bzw. 140, 142 zu unterscheiden.

Wenn der RFID-Transponder 120 auf das Abfragesignal 132 des RFID-Lesegeräts 110 antwortet und das Antwortsignal 142 mittels der elektromagnetischen Wellen 140 sendet, ändert sich der Rückstreuquerschnitt des RFID-Transponders 120, da sich die Impedanz an einem nicht dargestellten Antennenport des RFID-Transponders 120 während der Emission des Antwortsignals 142 ändert. Diese Änderung des Rückstreuquerschnitts des RFID-Transponders 120 wirkt sich auch auf das reflektierte Signal bzw. Detektionssignal 162 aus, das durch das Zusatzsignal 160 hervorgerufen wird, obwohl das Zusatzsignal 160 von dem Transceiver 151 bei einer anderen Frequenz ausgesendet wird, die sich von der Frequenz der elektromagnetischen Wellen 130, 140 unterscheidet.

Die Änderung des Rückstreuquerschnitts des RFID-Transponders 120 bei der Modulation der emittierten elektromagnetischen Wellen 140 zur Erzeugung des Antwortsignals 142 ist von der Frequenz unabhängig und dadurch über ein breites Frequenzband detektierbar. Dies bedeutet, dass sich die Modulation der von dem RFID-Transponder 120 emittierten Wellen 140 zur Erzeugung des Antwortsignals 142 auch auf die reflektierten Signale bzw. Detektionssignale 162 auswirkt und in diesen mittels der Empfangseinheit des Transceivers 151 nachweisbar ist.

Da die Frequenz der elektromagnetischen Wellen 140, die von dem RFID-Lesegerät 110 empfangen werden, und die Frequenz des Detektionssignals 162 verschieden sind, das von dem Transceiver 151 empfangen wird, lässt sich anhand der Phasenlage des Detektionssignals 162 an der Empfangseinheit des Transceivers 151 bezogen auf die Phasenlage der elektromagnetischen Wellen 140 bzw. des Antwortsignals 142 an dem RFID-Lesegerät 110 der Abstand d des RFID-Transponders 120 bezogen auf das RFID-Lesegerät 110 ermitteln. Explizit ist der Abstand d ähnlich wie bei frequenzmodulierten Radarsystemen durch folgenden Zusammenhang gegeben:

$$ d = - \frac{c}{4\pi} \frac{\partial \varphi}{\partial f} . $$

Dabei bezeichnet $\partial\varphi/\partial f$ die Änderung des Phasenwinkels bzw. der Phasenlage mit der Frequenz und c die Lichtgeschwindigkeit.

Außerdem kann mittels des Dopplereffekts die radiale Geschwindigkeit und die Bewegungsrichtung des RFID-Transponders 120 bezogen auf das RFID-Lesegerät 110 ermittelt werden, d.h. ebenfalls auf ähnliche Weise wie bei Radarsystemen aufgrund einer Frequenzverschiebung zwischen dem Zusatzsignal 160 und dem Detektionssignal 162.

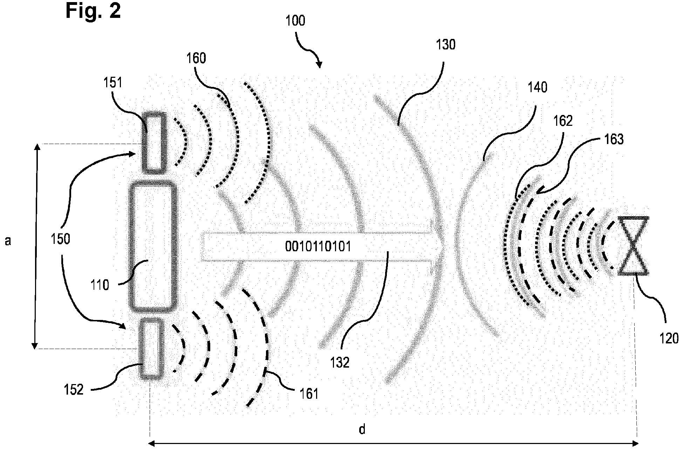

Fig. 2 zeigt eine Ausführungsform des RFID-Systems 100, die sich von der Ausführungsform von Fig. 1 dadurch unterscheidet, dass das RFID-System 100 eine Zusatzeinrichtung 150 mit einem ersten Transceiver 151 und einem zweiten Transceiver 152 umfasst. Ansonsten gilt die vorstehende Beschreibung des RFID-Systems 100 von Fig. 1 ebenso für die Ausführungsform von Fig. 2.

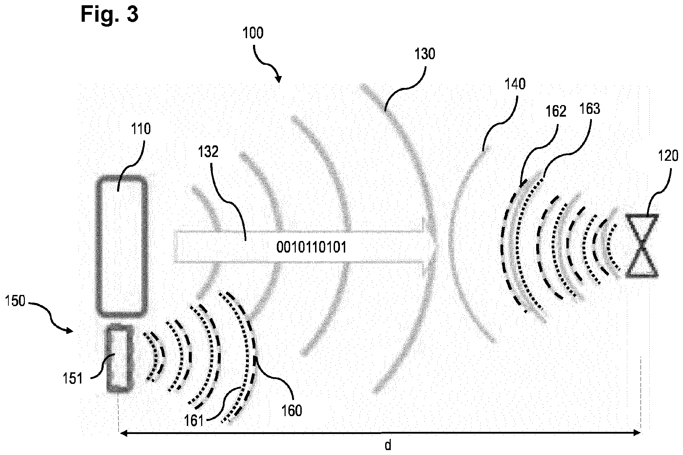

Die beiden Transceiver 151, 152 sind mit einer vorbestimmten Distanz a zwischen diesen auf beiden Seiten des RFID-Lesegeräts 110 angeordnet. Die beiden Transceiver 151, 152 senden ein jeweiliges Zusatzsignal 160, 161 bei unterschiedlichen Frequenzen in Richtung des RFID-Transponders 120. Die Frequenz des zweiten Zusatzsignals 161 unterscheidet sich somit sowohl von der Frequenz des ersten Zusatzsignals 160 als auch von der Frequenz der elektromagnetischen Wellen 130 bzw. 140, die zur Kommunikation zwischen dem RFID-Lesegerät 110 und dem RFID-Transponder 120 dienen. Ferner sind die beiden Zusatzsignale 160, 161 nicht-modulierte Dauerstrich- bzw. CW-Signale. Die Zusatzsignale 160, 161 und entsprechende Detektionssignale 162, 163 sind in Fig. 2 und 3 mit unterschiedlich gestrichelten Linien veranschaulicht, um diese in der Darstellung unterscheiden zu können.

Die beiden Zusatzsignale 160, 161 werden jeweils an dem RFID-Transponder 120 reflektiert, so dass ein jeweiliges Detektionssignal 162, 163, das durch das jeweilige Zusatzsignal 160, 161 hervorgerufen wird, von dem RFID-Transponder 120 in Richtung der beiden Transceiver 151, 152 zurückgesendet wird. Wie für die Ausführungsform von Fig. 1 vorstehend erläutert ist, ermöglicht eine Auswertung der Phasenlage der Detektionssignale 162, 163 bezogen auf die Phasenlage der von dem RFID-Lesegerät 110 empfangenen elektromagnetischen Wellen 140 die Ermittlung des Abstands d zwischen dem RFID-Transponder 120 und dem RFID-Lesegerät 110.

Die Verwendung zweier Transceiver 151, 152 und zweier Zusatzsignale 160, 161, die jeweils ein entsprechendes Detektionssignal 162, 163 hervorrufen, erhöht aufgrund der redundanten Auswertung der jeweiligen Signale 162, 163 die Genauigkeit bei der Ermittlung des Abstands d zwischen dem RFID-Lesegerät 120 und dem RFID-Lesegerät 110. Dies gilt ebenso für die Ermittlung der radialen Geschwindigkeit und der Bewegungsrichtung des RFID-Transponders 120 bezogen auf das RFID-Lesegerät 110 mittels des Dopplereffekts.

Ferner lässt sich anhand der Differenz zwischen der jeweiligen Phase des Detektionssignals 162 und des Detektionssignals 163 und anhand der Distanz a zwischen den beiden Transceivern 151, 152 ein Winkel des RFID-Transponders 120 bezogen auf eine vorbestimmte Richtung ermitteln, beispielsweise rechtwinklig zu der vorderen Außenfläche des RFID-Lesegeräts 110. Explizit ist dieser Winkel 8 durch folgende Beziehung gegeben:

$$ \theta \approx \sin^{-1}\left[ -\frac{c}{2\pi f} \frac{(\varphi_2 - \varphi_1)}{a} \right] $$

Dabei bezeichnen $\sin^{-1}$ die Umkehrfunktion des Sinus bzw. Arkussinus, f die ungefähr gleichgroße Frequenz der Zusatzsignale 160, 161, sowie $\varphi_1$ und $\varphi_2$ den jeweiligen Phasenwinkel der Detektionssignale 162 bzw. 163.

In Fig. 3 ist eine weitere Ausführungsform des RFID-Lesegerät 100 dargestellt, die ebenso wie das RFID-System 100 von Fig. 1 einen einzelnen Transceiver 151 als Zusatzeinrichtung 150 aufweist, d.h. zusätzlich zu dem RFID-Lesegerät 110 und dem RFID-Transponder 120.

Die Ausführungsform des RFID-Systems 100 von Fig. 3 unterscheidet sich jedoch von derjenigen von Fig. 1 dadurch, dass der Transceiver 151 zwei Zusatzsignale 160, 161 bei unterschiedlichen Frequenzen sendet. Dementsprechend werden wiederum zwei unterschiedliche Detektionssignale 162, 163, die durch die beiden Zusatzsignale 160,161 hervorgerufen werden, an den RFID-Transponder 120 reflektiert. Ansonsten gilt die Beschreibung des RFID-Systems 100 von Fig. 1 auch für das RFID-System 100 von Fig. 3.

Die Auswertung der Phasenlage der beiden Detektionssignale 162, 163 ermöglicht wiederum die Ermittlung des Abstands d zwischen dem RFID-Transponder 120 und dem RFID-Lesegerät 110 und zusätzlich die Ermittlung der Bewegungsrichtung sowie der radialen Geschwindigkeit des RFID-Transponders 120, d.h. auf dieselbe Weise, wie dies vorstehend in Zusammenhang mit Fig. 1 beschrieben ist.

Die von dem Transceiver 151 gesendeten Signale 160, 161 können bei der Ausführungsform von Fig. 3 auch FSK- oder Frequenzsprungsignale sein (FSK von engl.: frequency shift keying), bei denen in einer vorbestimmten zeitlichen Abfolge zwischen zwei Frequenzen periodisch abgewechselt wird. Anhand der Frequenzverschiebung bzw. des Frequenzsprungs zwischen diesen beiden Frequenzen und anhand der Phasendifferenz zwischen den beiden Detektionssignalen 162, 163 kann wiederum der Abstand d zwischen dem RFID-Transponder 120 und dem RFID-Lesegerät 110 ermittelt werden.

Darüber hinaus können auch weitere geeignete Signale verwendet werden, wie beispielsweise frequenzmodulierte CW-Signale oder Bursts. Ebenso wie bei den vorstehend beschriebenen Ausführungsformen sind die Frequenzen der beiden Zusatzsignale 160, 161 von der Trägerfrequenz der RFID-Signale 130, 140 unabhängig. Daher ist es möglich, die Frequenz der Zusatzsignale 160, 161 in einem ISM-Band auszuwählen, beispielsweise bei 2,4 GHz.

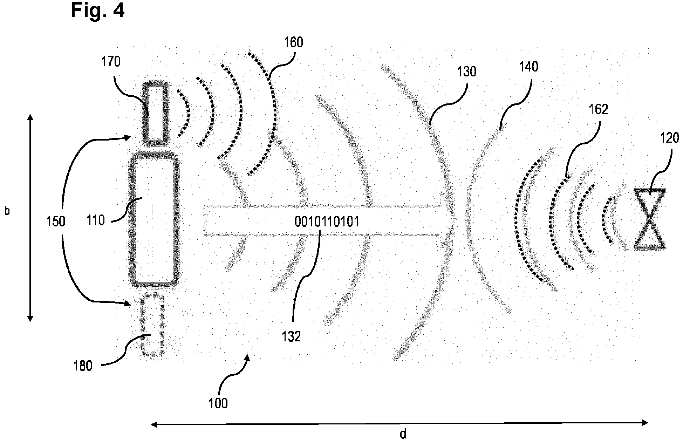

Fig. 4 zeigt eine weitere Ausführungsform des RFID-Systems 100, die sich von der in Fig. 1 dargestellten Ausführungsform dadurch unterscheidet, dass die Zusatzeinrichtung 150 anstelle des Transceivers 151 eine separate Sendeeinheit bzw. ein separater Transmitter 170 und eine separate Empfangseinheit bzw. ein separater Receiver 180 umfasst. Der Transmitter 170 und der Receiver 180 sind mit einer vorbestimmten Distanz b auf beiden Seiten des RFID-Lesegeräts 110 angeordnet. Der Transmitter 170 sendet wiederum ein Zusatzsignal 160, das sich bezüglich der Frequenz von dem Anforderungssignal 132 des RFID-Lesegeräts 110 und dem Antwortsignal 142 des RFID-Transponders 120 unterscheidet, in Richtung des RFID-Transponders 120. Das Zusatzsignal 160 wird an den RFID-Transponder 120 reflektiert und kann dadurch als Detektionssignal 162 mittels des Receivers 180 detektiert werden. Ansonsten gilt die Beschreibung des RFID-Systems 100 von Fig. 1 auch für die Ausführungsform von Fig. 4.

Aufgrund der Distanz b zwischen dem Transmitter 170 und dem Receiver 180 ist es zusätzlich möglich, eine Triangulation bezüglich der Phasenlage zwischen dem Zusatzsignal 160 und dem Detektionssignal 162 durchzuführen und dadurch die Position des RFID-Transponders 120 bezogen auf das RFID-Lesegerät 110 zu ermitteln. Durch eine solche zusätzliche Ermittlung der Position bzw. des Abstands d des RFID-Transponders 120 bezogen auf das RFID-Lesegerät 110 kann die Genauigkeit bei der Ermittlung des Abstands d erhöht werden.

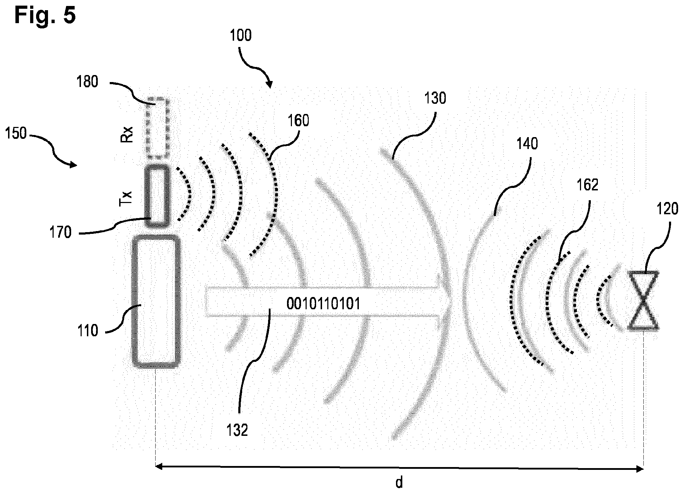

Fig. 5 zeigt eine weitere Ausführungsform des RFID-Systems 100, die sich jedoch von der in Fig. 4 dargestellten Ausführungsform nur dadurch unterscheidet, dass der Transmitter 170 und der Receiver 180 auf der gleichen Seite des RFID-Lesegeräts 110 angeordnet sind und nicht auf unterschiedlichen Seiten. Ansonsten gilt die Beschreibung von Fig. 1 und 4 sinngemäß auch für die Ausführungsform von Fig. 5.

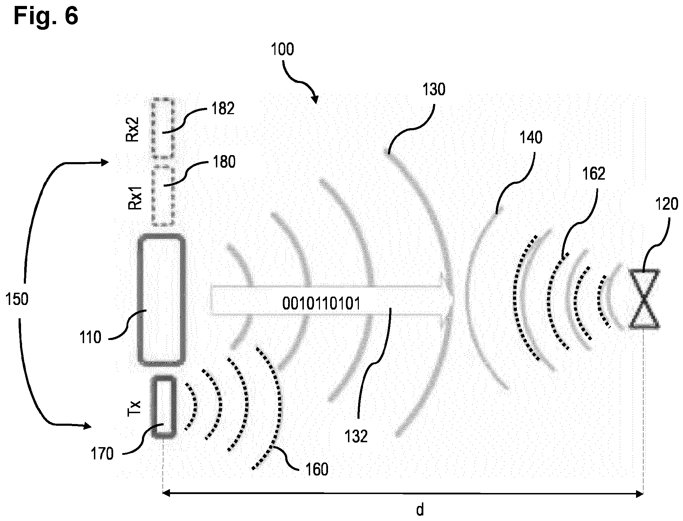

Ferner zeigt Fig. 6 eine weitere Ausführungsform des RFID-Systems 100, die sich von der in Fig. 4 dargestellten Ausführungsform lediglich dadurch unterscheidet, dass ein zweiter Receiver 182 vorgesehen ist. Der zweite Receiver 182 ermöglicht eine zusätzliche bzw. redundante Ermittlung der Position des RFID-Transponders 120 bezogen auf das RFID-Lesegerät 110. Dadurch kann die Genauigkeit bei der Ermittlung der Position des RFID-Transponders 120 bzw. von dessen Abstand bezogen auf das RFID-Lesegerät 110 erhöht werden.

Allen Ausführungsformen des RFID-Systems von Fig. 1 bis 6 ist gemeinsam, dass nur ein Auslesevorgang bzw. ein gleichzeitiges Auslesen des RFID-Lesegeräts 110 und der Transceiver 151, 152 bzw. der Receiver 180, 182 erforderlich ist, um die notwendigen Informationen zur Ermittlung der Position des RFID-Transponders 120 zu erfassen. Der zeitliche Aufwand zur Ermittlung dieser Position und weiterer kinetischer Parameter des RFID-Transponders 120, wie etwa der Bewegungsrichtung und der radialen Geschwindigkeit, ist folglich gering, da keine bestimmte zeitliche Abfolge von Signalen emittiert und anschließend wieder detektiert zu werden braucht.

Bezugszeichenliste

| | |
|---|---|
| 100 | RFID-System |
| 110 | RFID-Lesegerät |
| 120 | RFID-Transponder |
| 130 | von dem RFID-Lesegerät emittierte elektromagnetische Wellen |
| 132 | Abfragesignal |
| 140 | von dem RFID-Transponder emittierte elektromagnetische Wellen |
| 142 | Antwortsignal |
| 150 | Zusatzeinrichtung |
| 151 | erster Transceiver |
| 152 | zweiter Transceiver |
| 160 | erstes Zusatzsignal |
| 161 | zweites Zusatzsignal |
| 162 | erstes Detektionssignal |
| 163 | zweites Detektionssignal |

170 Transmitter
180 erster Receiver
182 zweiter Receiver
a Distanz zwischen erster und zweiter Sendeeinheit und zwischen erster und zweiter Empfangseinheit
b Distanz zwischen Transmitter und erstem Receiver
d Abstand zwischen RFID-Lesegerät und RFID-Transponder

**Patentansprüche**

1. System (100) zur Lokalisierung eines Transponders (120), der zur Identifikation im Radiofrequenzbereich vorgesehen ist (RFID-Transponder), bezogen auf ein RFID-Lesegerät (110), wobei das System (100) umfasst:

   das RFID-Lesegerät (110), das ein Anforderungssignal (132) bei einer vorbestimmten Frequenz aussendet,
   den RFID-Transponder (120), der das Anforderungssignal (132) empfängt und ein Antwortsignal (142) an das RFID-Lesegerät (110) zurücksendet, und
   eine Zusatzeinrichtung (150) mit:

   mindestens einer Sendeeinheit (151, 152, 170), die mindestens ein Zusatzsignal (160, 161) aussendet, das sich von dem Anforderungssignal (132) bezüglich der Frequenz unterscheidet, und
   mindestens einer Empfangseinheit (151, 152, 180, 182), die mindestens ein Detektionssignal (162, 163) detektiert, das durch eine Wechselwirkung des Zusatzsignals (160, 161) mit dem RFID-Transponder (120) entsteht,

   wobei die Zusatzeinrichtung (150) ausgebildet ist, anhand des Detektionssignals (162, 163) mindestens eine Information zur Lokalisierung des RFID-Transponders (120) bezogen auf das RFID-Lesegerät (110) zu ermitteln.

2. System (100) nach Anspruch 1, wobei das von der Sendeeinheit (151, 152, 170) der Zusatzeinrichtung (150) gesendete Zusatzsignal (160, 161) ein nicht-moduliertes Signal ist.

3. System (100) nach Anspruch 1 oder 2, wobei die Frequenz des Zusatzsignals (160, 161) außerhalb eines Frequenzbands liegt, das für eine Kommunikation des RFID-Lesegeräts (110) und des RFID-Transponders (120) vorgesehen ist.

4. System (100) nach einem der vorstehenden Ansprüche, wobei

   die Sendeeinheit (151, 152) mindestens zwei Zusatzsignale (160, 161) aussendet, die sich jeweils von dem Anforderungssignal (132) bezüglich der Frequenz unterscheiden, und
   die Empfangseinheit (151, 152) mindestens zwei Detektionssignale (162, 163) bei der jeweiligen Frequenz der mindestens zwei Zusatzsignale (160, 161) detektiert.

5. System (100) nach Anspruch 4, wobei die Zusatzeinrichtung (150) ausgebildet ist, einen Abstand (d), eine Bewegungsrichtung und eine Geschwindigkeit des RFID-Transponders (120) bezogen auf das RFID-Lesegerät (110) anhand der mindestens zwei Detektionssignale zu ermitteln.

6. System (100) nach Anspruch 4 oder 5, wobei

   die Zusatzeinrichtung (150) eine erste und eine zweite Sendeeinheit (151, 152) sowie eine erste und eine zweite Empfangseinheit (151, 152) aufweist,
   die erste Sendeeinheit (151) und die erste Empfangseinheit (151) von der zweiten Sendeeinheit (152) und der zweiten Empfangseinheit (152) mit einer vorbestimmten Distanz (a) zwischen diesen räumlich getrennt sind und
   die Zusatzeinrichtung (150) ausgebildet ist, einen Winkel des RFID-Transponders (120) bezogen auf eine vorbestimmte Richtung anhand der mindestens zwei Detektionssignale (162, 163) und anhand der vorbestimmten Distanz (a) zu ermitteln.

7. System (100) nach einem der vorstehenden Ansprüche, wobei das RFID-Lesegerät (110) ausgebildet ist, die Zusatzeinrichtung (150) derart zu steuern, dass die Sendeeinheit (151, 152, 170) der Zusatzeinrichtung (150) das Zusatzsignal (160, 161) nur dann sendet, wenn das RFID-Lesegerät (110) das Anforderungssignal (132) aussendet.

8. System (100) nach einem der vorstehenden Ansprüche, wobei

   die Zusatzeinrichtung (150) als ein Transceiver (151, 152) ausgebildet ist, der die Sendeeinheit (151, 152, 170) und die Empfangseinheit (151, 152, 180, 182) umfasst, und
   das von dem Transceiver (151, 152) gesendete Zusatzsignal (160, 161) entweder ein nicht-moduliertes Signal in einem Frequenzband des Anforderungssignals (132) oder ein moduliertes Signal bei einer Frequenz außerhalb des Frequenzbandes des Anforderungssignals (132) ist.

9. System (100) nach einem der vorstehenden Ansprüche, wobei

    die Zusatzeinrichtung (150) mindestens zwei Transceiver (151, 152) umfasst, die eine jeweilige Sendeeinheit (151, 152, 170) und eine jeweilige Empfangseinheit (151, 152, 180, 182) aufweisen, und
    die jeweilige Sendeeinheit (151, 152) der Transceiver (151, 152) ein jeweiliges Zusatzsignal (160, 161) als ein nicht-moduliertes Signal außerhalb eines Frequenzbandes des Anforderungssignals (132) sendet.

10. System (100) nach einem der Ansprüche 1 bis 8, wobei

    die Zusatzeinrichtung (150) einen Transceiver (151) umfasst, der die Sendeeinheit (151, 152, 170) und die Empfangseinheit (151, 152, 180, 182) aufweist, und
    die Sendeeinheit (151, 152, 170) mindestens zwei Zusatzsignale (160, 161) als nicht-modulierte Signale sendet.

11. System (100) nach einem der vorstehenden Ansprüche, wobei
    die Sendeeinheit (151, 152, 170) mindestens ein Zusatzsignal (160, 161) zur Anwendung eines Frequenzsprungverfahrens sendet.

12. System (100) nach einem der Ansprüche 1 bis 7, wobei
    die Sendeeinheit (170) und die Empfangseinheit (180) der Zusatzeinrichtung (150) räumlich getrennt voneinander angeordnet sind.

13. System (100) nach einem der Ansprüche 1 bis 7 oder 12, wobei

    die Zusatzeinrichtung (150) eine Sendeeinheit (170) und zwei Empfangseinheiten (180, 182) aufweist und
    die Sendeeinheit (170) räumlich getrennt von den zwei Empfangseinheiten (180, 182) angeordnet ist.

14. Verfahren zur Lokalisierung eines RFID-Transponders (120) bezogen auf ein RFID-Lesegerät (110) in einem RFID-System (100), wobei das Verfahren umfasst, dass:

    das RFID-Lesegerät (110) ein Anforderungssignal (132) bei einer vorbestimmten Frequenz aussendet,
    der RFID-Transponder (120) das Anforderungssignal (132) empfängt und ein Antwortsignal an das RFID-Lesegerät (110) zurücksendet, mindestens eine Sendeeinheit (151, 152, 170) einer Zusatzeinrichtung (150) mindestens ein Zusatzsignal (160, 161) aussendet, das sich von dem Anforderungssignal (132) bezüglich der Frequenz unterscheidet, und mindestens eine Empfangseinheit (151, 152, 180, 182) der Zusatzeinrichtung (150) mindestens ein Detektionssignal (162, 163) detektiert, das durch eine Wechselwirkung des mindestens einen Zusatzsignals (160, 161) mit dem RFID-Transponder (120) erzeugt wird, und anhand des Detektionssignals (162, 163) mindestens eine Information zur Lokalisierung des RFID-Transponders (120) bezogen auf das RFID-Lesegerät (110) ermittelt wird.

15. Verfahren nach Anspruch 14, das ferner umfasst, dass:

    die Sendeeinheit (151, 152, 170) mindestens zwei Zusatzsignale (160, 161) aussendet, die sich jeweils von dem Anforderungssignal (132) bezüglich der Frequenz unterscheiden, die Empfangseinheit (151, 152, 180, 182) mindestens zwei Detektionssignale (162, 163) bei der jeweiligen Frequenz der mindestens zwei Zusatzsignale (160, 161) detektiert, ein Abstand (d), eine Bewegungsrichtung und eine Geschwindigkeit des RFID-Transponders (120) bezogen auf das RFID-Lesegerät (110) anhand der mindestens zwei Detektionssignale (162, 163) ermittelt werden, wobei insbesondere die zwei Zusatzsignale (160, 161) von zwei verschiedenen Sendeeinheiten (151, 152) gesendet werden, die eine vorbestimmte räumliche Distanz (a) zwischen diesen aufweisen, und ein Winkel des RFID-Transponders (120) bezogen auf eine vorbestimmte Richtung anhand der mindestens zwei Detektionssignale (162, 163) und anhand der vorbestimmten räumlichen Distanz (a) ermittelt wird.

**Geänderte Patentansprüche gemäss Regel 137(2) EPÜ.**

1. System (100) zur Lokalisierung eines Transponders (120), der zur Identifikation im Radiofrequenzbereich vorgesehen ist (RFID-Transponder), bezogen auf ein RFID-Lesegerät (110), wobei das System (100) umfasst:

    das RFID-Lesegerät (110), das ein Anforderungssignal (132) bei einer vorbestimmten Frequenz aussendet,
    den RFID-Transponder (120), der das Anforderungssignal (132) empfängt und ein Antwortsignal (142) an das RFID-Lesegerät (110) zurücksendet, und
eine Zusatzeinrichtung (150) mit:

mindestens einer Sendeeinheit (151, 152, 170), die mindestens ein Zusatzsignal (160, 161) aussendet, das sich von dem Anforderungssignal (132) bezüglich der Frequenz unterscheidet, und
mindestens einer Empfangseinheit (151, 152, 180, 182), die mindestens ein Detektionssignal (162, 163) detektiert, das durch eine Wechselwirkung des Zusatzsignals (160, 161) mit dem RFID-Transponder (120) entsteht,

wobei die Zusatzeinrichtung (150) ausgebildet ist, anhand des Detektionssignals (162, 163) mindestens eine Information zur Lokalisierung des RFID-Transponders (120) bezogen auf das RFID-Lesegerät (110) zu ermitteln,

**dadurch gekennzeichnet, dass**

die Sendeeinheit (151, 152) mindestens zwei Zusatzsignale (160, 161) aussendet, die sich jeweils von dem Anforderungssignal (132) bezüglich der Frequenz unterscheiden,
wobei die Empfangseinheit (151, 152) mindestens zwei Detektionssignale (162, 163) bei der jeweiligen Frequenz der mindestens zwei Zusatzsignale (160, 161) detektiert und
die Zusatzeinrichtung (150) ausgebildet ist, einen Abstand (d), eine Bewegungsrichtung und eine Geschwindigkeit des RFID-Transponders (120) bezogen auf das RFID-Lesegerät (110) anhand der mindestens zwei Detektionssignale zu ermitteln;
und/oder
wobei die Zusatzeinrichtung (150) eine erste und eine zweite Sendeeinheit (151, 152) sowie eine erste und eine zweite Empfangseinheit (151, 152) aufweist,
die erste Sendeeinheit (151) und die erste Empfangseinheit (151) von der zweiten Sendeeinheit (152) und der zweiten Empfangseinheit (152) mit einer vorbestimmten Distanz (a) zwischen diesen räumlich getrennt sind und
die Zusatzeinrichtung (150) ausgebildet ist, einen Winkel des RFID-Transponders (120) bezogen auf eine vorbestimmte Richtung anhand der mindestens zwei Detektionssignale (162, 163) und anhand der vorbestimmten Distanz (a) zu ermitteln.

2. System (100) nach Anspruch 1, wobei
das von der Sendeeinheit (151, 152, 170) der Zusatzeinrichtung (150) gesendete Zusatzsignal (160, 161) ein nicht-moduliertes Signal ist.

3. System (100) nach Anspruch 1 oder 2, wobei
die Frequenz des Zusatzsignals (160, 161) außerhalb eines Frequenzbands liegt, das für eine Kommunikation des RFID-Lesegeräts (110) und des RFID-Transponders (120) vorgesehen ist.

4. System (100) nach einem der vorstehenden Ansprüche, wobei
das RFID-Lesegerät (110) ausgebildet ist, die Zusatzeinrichtung (150) derart zu steuern, dass die Sendeeinheit (151, 152, 170) der Zusatzeinrichtung (150) das Zusatzsignal (160, 161) nur dann sendet, wenn das RFID-Lesegerät (110) das Anforderungssignal (132) aussendet.

5. System (100) nach einem der vorstehenden Ansprüche, wobei

die Zusatzeinrichtung (150) als ein Transceiver (151, 152) ausgebildet ist, der die Sendeeinheit (151, 152, 170) und die Empfangseinheit (151, 152, 180, 182) umfasst, und
das von dem Transceiver (151, 152) gesendete Zusatzsignal (160, 161) entweder ein nicht-moduliertes Signal in einem Frequenzband des Anforderungssignals (132) oder ein moduliertes Signal bei einer Frequenz außerhalb des Frequenzbandes des Anforderungssignals (132) ist.

6. System (100) nach einem der vorstehenden Ansprüche, wobei

die Zusatzeinrichtung (150) mindestens zwei Transceiver (151, 152) umfasst, die eine jeweilige Sendeeinheit (151, 152, 170) und eine jeweilige Empfangseinheit (151, 152, 180, 182) aufweisen, und
die jeweilige Sendeeinheit (151, 152) der Transceiver (151, 152) ein jeweiliges Zusatzsignal (160, 161) als ein nicht-moduliertes Signal außerhalb eines Frequenzbandes des Anforderungssignals (132) sendet.

7. System (100) nach einem der Ansprüche 1 bis 5, wobei

die Zusatzeinrichtung (150) einen Transceiver (151) umfasst, der die Sendeeinheit (151, 152, 170) und die Empfangseinheit (151, 152, 180, 182) aufweist, und
die Sendeeinheit (151, 152, 170) mindestens zwei Zusatzsignale (160, 161) als nicht-modulierte Signale sendet.

8. System (100) nach einem der vorstehenden Ansprüche, wobei die Sendeeinheit (151, 152, 170) mindestens ein Zusatzsignal (160, 161) zur Anwendung eines Frequenzsprungverfahrens sendet.

9. System (100) nach einem der Ansprüche 1 bis 4, wobei die Sendeeinheit (170) und die Empfangseinheit (180) der Zusatzeinrichtung (150) räumlich getrennt voneinander angeordnet sind.

10. System (100) nach einem der Ansprüche 1 bis 4 oder 9, wobei

die Zusatzeinrichtung (150) eine Sendeeinheit (170) und zwei Empfangseinheiten (180, 182) aufweist und
die Sendeeinheit (170) räumlich getrennt von den zwei Empfangseinheiten (180, 182) angeordnet ist.

11. Verfahren zur Lokalisierung eines RFID-Transponders (120) bezogen auf ein RFID-Lesegerät (110) in einem RFID-System (100), wobei das Verfahren umfasst, dass:

das RFID-Lesegerät (110) ein Anforderungssignal (132) bei einer vorbestimmten Frequenz aussendet,
der RFID-Transponder (120) das Anforderungssignal (132) empfängt und ein Antwortsignal an das RFID-Lesegerät (110) zurücksendet,
mindestens eine Sendeeinheit (151, 152, 170) einer Zusatzeinrichtung (150) mindestens ein Zusatzsignal (160, 161) aussendet, das sich von dem Anforderungssignal (132) bezüglich der Frequenz unterscheidet, und
mindestens eine Empfangseinheit (151, 152, 180, 182) der Zusatzeinrichtung (150) mindestens ein Detektionssignal (162, 163) detektiert, das durch eine Wechselwirkung des mindestens einen Zusatzsignals (160, 161) mit dem RFID-Transponder (120) erzeugt wird, und anhand des Detektionssignals (162, 163) mindestens eine Information zur Lokalisierung des RFID-Transponders (120) bezogen auf das RFID-Lesegerät (110) ermittelt wird,

**dadurch gekennzeichnet, dass**

die Sendeeinheit (151, 152, 170) mindestens zwei Zusatzsignale (160, 161) aussendet, die sich jeweils von dem Anforderungssignal (132) bezüglich der Frequenz unterscheiden, wobei die Empfangseinheit (151, 152, 180, 182) mindestens zwei Detektionssignale (162, 163) bei der jeweiligen Frequenz der mindestens zwei Zusatzsignale (160, 161) detektiert und ein Abstand (d), eine Bewegungsrichtung und eine Geschwindigkeit des RFID-Transponders (120) bezogen auf das RFID-Lesegerät (110) anhand der mindestens zwei Detektionssignale (162, 163) ermittelt werden; und/oder wobei die zwei Zusatzsignale (160, 161) von zwei verschiedenen Sendeeinheiten (151, 152) gesendet werden, die eine vorbestimmte räumliche Distanz (a) zwischen diesen aufweisen, und ein Winkel des RFID-Transponders (120) bezogen auf eine vorbestimmte Richtung anhand der mindestens zwei Detektionssignale (162, 163) und anhand der vorbestimmten räumlichen Distanz (a) ermittelt wird.

**Fig. 1**

Fig. 2

**Fig. 3**

100 130 140 162 163 120 110 132 0010110101 150 151 160 161 d

## Fig. 4

0010110101

# Fig. 5

**Fig. 6**

Europäisches
Patentamt

European
Patent Office

Office européen
des brevets

# EUROPÄISCHER RECHERCHENBERICHT

**Nummer der Anmeldung**

EP 24 21 1239

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/034583 A1 (NIKITIN PAVEL [US] ET AL) 30. Januar 2020 (2020-01-30) | 1-4,7-14 | INV. G06K7/00 |
| A | * Zusammenfassung *<br>* Absatz [0057] - Absatz [0068] *<br>* Abbildungen 1,8 *<br>----- | 5,6,15 | G06K7/10<br>G01S13/87 |
| A | DE 10 2014 200037 A1 (SIEMENS AG [DE]) 9. Juli 2015 (2015-07-09)<br>* Absatz [0001] - Absatz [0006] *<br>* Absatz [0017] *<br>* Abbildungen 1,2 *<br>----- | 1-15 | |
| A | US 2012/127976 A1 (LIN LANG [US] ET AL) 24. Mai 2012 (2012-05-24)<br>* Zusammenfassung *<br>* Absatz [0057] - Absatz [0062] *<br>* Abbildungen 1,4 *<br>----- | 1-15 | |
| A | US 2013/076568 A1 (SHOARINEJAD KAMBIZ [US] ET AL) 28. März 2013 (2013-03-28)<br>* Zusammenfassung *<br>* Absatz [0107] - Absatz [0114] *<br>* Abbildungen *<br>----- | 1-15 | RECHERCHIERTE SACHGEBIETE (IPC)<br><br>G06K<br>G01S |

Der vorliegende Recherchenbericht wurde für alle Patentansprüche erstellt

| Recherchenort | Abschlußdatum der Recherche | Prüfer |
|---|---|---|
| München | 16. April 2025 | Berger, Christian |

**ANHANG ZUM EUROPÄISCHEN RECHERCHENBERICHT**
**ÜBER DIE EUROPÄISCHE PATENTANMELDUNG NR.**   EP 24 21 1239

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2025

| Im Recherchenbericht angeführtes Patentdokument | Datum der Veröffentlichung | Mitglied(er) der Patentfamilie | | Datum der Veröffentlichung |
|---|---|---|---|---|
| US 2020034583 A1 | 30-01-2020 | CN | 110781983 A | 11-02-2020 |
| | | CN | 117291203 A | 26-12-2023 |
| | | EP | 3608827 A1 | 12-02-2020 |
| | | US | 2020034583 A1 | 30-01-2020 |
| DE 102014200037 A1 | 09-07-2015 | CN | 105874467 A | 17-08-2016 |
| | | DE | 102014200037 A1 | 09-07-2015 |
| | | EP | 3077954 A1 | 12-10-2016 |
| | | ES | 2697404 T3 | 23-01-2019 |
| | | US | 2016357997 A1 | 08-12-2016 |
| | | WO | 2015104078 A1 | 16-07-2015 |
| US 2012127976 A1 | 24-05-2012 | CN | 103229192 A | 31-07-2013 |
| | | EP | 2643794 A1 | 02-10-2013 |
| | | US | 2012127976 A1 | 24-05-2012 |
| | | WO | 2012071132 A1 | 31-05-2012 |
| US 2013076568 A1 | 28-03-2013 | US | 2008143482 A1 | 19-06-2008 |
| | | US | 2013076568 A1 | 28-03-2013 |
| | | US | 2015057919 A1 | 26-02-2015 |
| | | US | 2017328996 A1 | 16-11-2017 |
| | | US | 2018313947 A1 | 01-11-2018 |
| | | US | 2019235069 A1 | 01-08-2019 |
| | | US | 2021199794 A1 | 01-07-2021 |
| | | US | 2024402331 A1 | 05-12-2024 |

EPO FORM P0461

Für nähere Einzelheiten zu diesem Anhang : siehe Amtsblatt des Europäischen Patentamts, Nr.12/82